# Europäisches Patentamt
# European Patent Office
# Office européen des brevets

(19)

(11) Veröffentlichungsnummer: **0 147 367**
**B1**

(12) # EUROPÄISCHE PATENTSCHRIFT

(45) Veröffentlichungstag der Patentschrift:
19.04.89

(51) Int. Cl.⁴: **C 02 F 3/16**

(21) Anmeldenummer: **84810595.3**

(22) Anmeldetag: **05.12.84**

(54) **Abwasserbelüftungssystem, Verfahren zum Betrieb und Verwendung desselben.**

(30) Priorität: **07.12.83 CH 6539/83**

(43) Veröffentlichungstag der Anmeldung:
**03.07.85 Patentblatt 85/27**

(45) Bekanntmachung des Hinweises auf die Patenterteilung:
**19.04.89 Patentblatt 89/16**

(84) Benannte Vertragsstaaten:
**AT DE FR GB IT NL**

(56) Entgegenhaltungen:
**DE-A-1 706 603**
**DE-A-2 706 922**
**DE-A-2 923 375**
**DE-A-3 224 015**

(73) Patentinhaber: **Kaelin, Joseph Richard,
Beckenriedstrasse 58, CH- 6374 Buochs (CH)**

(72) Erfinder: **Kaelin, Joseph Richard,
Beckenriedstrasse 58, CH- 6374 Buochs (CH)**

(74) Vertreter: **Werffeli, Heinz R., Dipl.- Ing., Postfach
275 Waldgartenstrasse 12, CH- 8125 Zürich-
Zollikerberg (CH)**

EP 0 147 367 B1

**Beschreibung**

Die Erfindung betrifft einen Oberflächenbelüftungskreisel zum Umwälzen und Belüften von Wasser, insbesondere von Abwasser in Kläranlagen, mit einem mit einer vertikal verlaufenden Antriebsachse verbundenen Tragteil mit einer Mehrzahl von an diesem befestigten, aus je mindestens einer Schaufel und einer zugeordneten Strömungsleitwand bestehenden Flüssigkeitsfördereinheiten, deren Eintrittsseite sich im Betrieb unterhalb dem Wasserspiegel und deren Austrittsseite sich im Betrieb mindestens zum grösseren Teil oberhalb dem Wasserspiegel befindet, ein Verfahren zum Betrieb dieses Oberflächenbelüftungskreisels sowie eine Verwendung desselben.

Die bisher bekannten Oberflächenbelüftungskreisel weisen den Nachteil auf, dass die zur Eintragung von Sauerstoff in das zu belüftende Abwasser erforderliche Kreiselantriebsleistung relativ hoch ist.

Aufgabe der vorliegenden Erfindung ist die Schaffung eines Oberflächenbelüftungskreisels, welcher für den gleichen Sauerstoffeintrag eine bedeutend geringere Antriebsleistung benötigt.

Diese Aufgabe wird bei einem Oberflächenbelüftungskreisel der eingangs genannten Art erfindungsgemäss dadurch gelöst, dass die einzelnen Flüssigkeitsfördereinheiten derart ausgebildet sind, dass die Schaufel mindestens annähernd in einer in Umlaufrichtung des Kreisels gekrümmten in sich verwundenen Ebene verläuft, dass der Anstellwinkel der oberen Austrittsseite in einem Bereich von 60° bis 105° und der mindestens 35° weniger betragende Anstellwinkel der unteren Eintrittsseite in einem Bereich von 0° bis 50° liegt.

Dabei ist es zweckmässig, wenn die Strömungsleitrichtung der in sich verwundenen Schaufelebene mindestens annähernd in einer Radialebene des Kreisels verläuft.

Zur Erzielung der gewünschten Ausströmrichtung ist es vorteilhaft, wenn über mindestens einen Teil der oberen, im Betrieb des Kreisels mindestens zum Teil aus dem Wasser herausragenden Schaufellängsseite eine in Drehrichtung des Kreisels von der Schaufel weg sich erstreckende Strömungsleitwand angeordnet ist. Dabei ist es zweckmässig, wenn auch über mindestens einen Teil der unteren, im Betrieb des Kreisels zum Teil aus dem Wasser herausragenden Schaufellängsseite eine in Drehrichtung des Kreisels von der Schaufel weg sich erstreckende Strömungsleitwand angeordnet ist. Zur Erzielung der gewünschten Form der Austrittsströmung ist es ausserdem vorteilhaft, wenn der Anstellwinkel der oberen Austrittsseite in einem Bereich von 75° bis 90° liegt.

Um den einer Drehung des Kreisels entgegengesetzten Strömungswiderstand nicht zu hoch werden zu lassen, ist es vernünftig, wenn der Anstellwinkel der unteren Austrittsseite in einem Bereich von 20° bis 40° liegt.

Um die gleichen Flüssigkeitsfördereinheiten universell für verschiedene Kreiseldurchmesser, Drehzahlen, Beckengrössen und -formen etc. verwenden zu können, ist es zweckmässig, wenn die einzelnen Flüssigkeitsfördereinheiten um eine horizontale und vorzugsweise auch um eine vertikale Achse verstellbar mit dem Tragteil verbunden sind.

Weitere vorteilhafte Weiterausgestaltungen des erfindungsgemässen Oberflächenbelüftungskreisels sind Gegenstand der Ansprüche 8 bis 13.

Gegenstand der vorliegenden Erfindung ist ferner ein Verfahren zum Betrieb von erfindungsgemässen Oberflächenbelüftungskreiseln, welches dadurch gekennzeichnet ist, dass man nach dem Baukastensystem zusammengesetzte Kreisel unterschiedlichen Durchmessers jedoch mit gleichen Flüssigkeitsfördereinheiten mit der gleichen Umfangsgeschwindigkeit betreibt.

Gegenstand der vorliegenden Erfindung ist ausserdem eine Verwendung des erfindungsgemässen Oberflächenbelüftungskreisels in einem Abwasserbelüftungsbecken, welche dadurch gekennzeichnet ist, dass unterhalb dem Kreisel und koaxial zu dessen Drehachse ein bis in den Bodenbereich des Beckens sich erstreckendes Strömungsleitrohr angeordnet ist, welcher vorzugsweise auf seiner Einström- und/oder Ausströmseite mit je einem feststehenden Strömungsleitapparat versehen ist. Um zu vermeiden, dass Oberflächenwasser unmittelbar von der Oberfläche her wieder in den Kreisel angesogen wird, ist es zweckmässig, wenn der Kreisel auf seiner Aussenseite von einer über die Wasseroberfläche sich erstrekkenden Tauchwand umgeben ist, welche vorzugsweise über einen einer kegelstumpfförmigen Mantelfläche entsprechenden Verbindungsteil mit dem Strömungsleitrohr verbunden ist.

Gegenstand der vorliegenden Erfindung ist ebenfalls eine Verwendung des erfindungsgemässen Oberflächenbelüftungskreisels in einem Abwasserbelüftungsbecken, welche dadurch gekennzeichnet ist, dass in letzterem mindestens eine horizontal und/oder eine vertikal sich erstreckende Strömungsbremsplatte angeordnet ist.

Nachstehend wird die Erfindund anhand der Zeichnung beispielsweise erläutert. Es zeigt:

Fig. 1    Querschnitt durch ein Abwasserbelüftungsbecken die Anordnung einer beispielsweisen Ausführungsform eines erfindungsgemässen Oberflächenbelüftungskreisels;

Fig. 2    einen Schnitt längs der Linie II - II in Fig. 1, wobei die linke Hälfte ein Becken mit quadratischem Grundriss und die rechte Hälfte ein Becken mit kreisförmigem Grundriss zeigt;

Fig. 3    im Aufriss eine beispielsweise
          Ausführungsform einer
          Flüssigkeitsförderheit des in Fig. 1
          verwendeten Kreisels;

Fig. 4    eine Stirnansicht auf die Ausströmseite
          der in Fig. 3 dargestellten
          Flüssigkeitsfördereinheit;

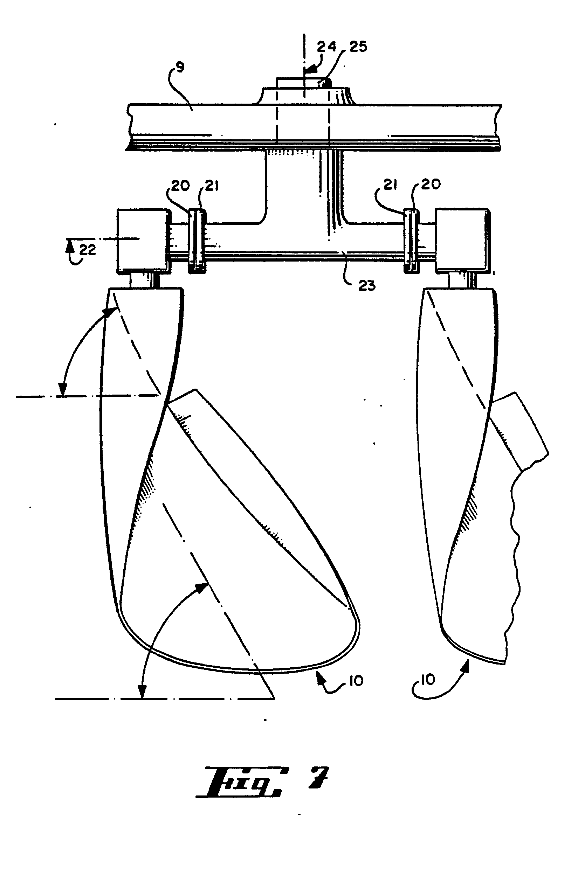

Fig. 5    eine Stirnansicht auf die Einströmseite
          der in Fig. 3 dargestellten
          Flüssigkeitsfördereinheit;

Fig. 6    einen Grundriss der in Fig. 3
          dargestellten Flüssigkeitsfördereinheit;
          und

Fig. 7    in Seitenansicht eine beispielsweise
          Verbindung von je zwei
          Flüssigkeitsfördereinheiten mit dem
          Tragring des Kreisels.

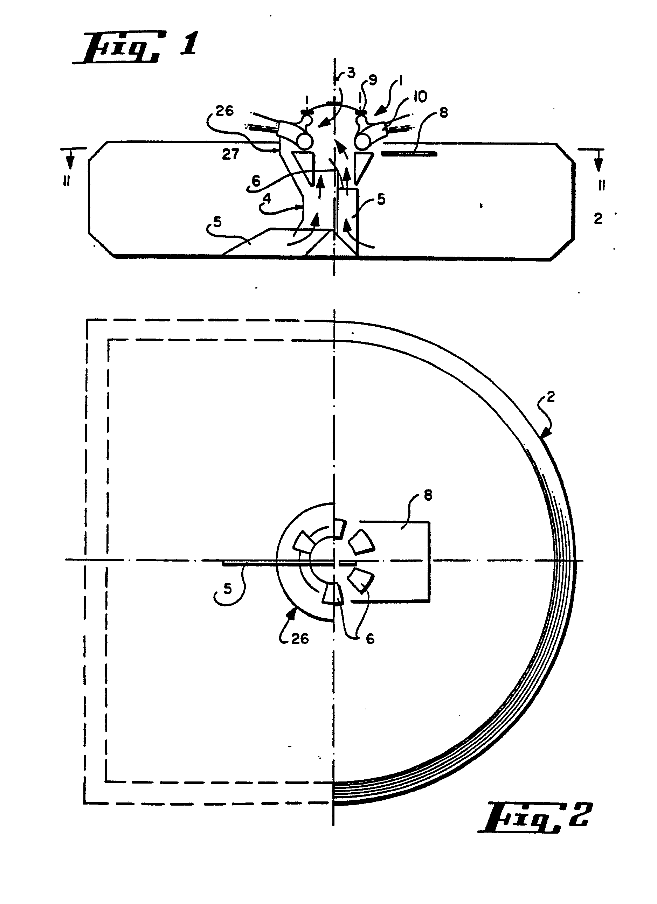

In den Fig. 1 und 2 ist der Oberflächenbelüftungskreisel 1 in einem Abwasserbelüftungskreisel 1 in einem Abwasserbelüftungsbecken 2 einer Kläranlage angeordnet, wobei zur gezielten Umwälzung und Belüftung des gesamten Beckeninhalts unterhalb dem Kreisel 1 und koaxial zu seiner Drehachse 3 ein bis in den Bodenbereich des Beckens sich erstreckendes Strömungsleitrohr 4 (nur bei der in den Fig. 1 und 2 in der linken Hälfte dargestellten Ausführungsform) angeordnet ist. Zur drallfreien Einströmung des zu belüftenden Abwassers in die Ansaugseite des Strömungsleitrohres 4 ist auf dieser Seite am Boden des Belüftungsbeckens 2 ein feststehender erster Strömungsleitapparat 5 vorgesehen.

Auf der der Ansaugseite des Kreisels 1 zugewandten Ausströmseite des Strömungsleitrohres 4 ist ein zweiter feststehender Strömungsleitapparat 6 vorgesehen, welcher das aus dem Strömungsleitrohr 4 ausströmende zu belüftende Abwasser in der zur Erzielung einer optimalen Sauerstoffeintragsleistung des Kreisels erforderlichen Anströmrichtung der Ansaugseite des letzteren zuleitet.

Bei der in den Fig. 1 und 2 in der rechten Hälfte dargestellten Ausführungsform erstreckt sich der erste feststehende Leitapparat 5 vom Beckenboden bis an die Unterseite des zweiten feststehenden Strömungsleitapparates 6.

Gegen ein unerwünschtes Pulsieren des im Becken 2 sich befindenden Abwassers ist eine horizontal ausgerichtete Dämpfplatte 8 vorgesehen.

Die Ausbildung der einzelnen am Tragring 9 des Kreisels 1 befestigten Flüssigkeitsfördereinheiten 10 ist aus den Fig. 3 bis 6 ersichtlich.

Wie aus diesen Figuren ersichtlich, sind diese Flüssigkeitsfördereinheiten 10 derart ausgebildet, dass die Schaufel 11 etwa in einer in Umlaufrichtung V des Kreisels 1 gekrümmten, in sich verwundenen Ebene verläuft, derart, dass die Strömungsleitrichtung der letzteren mindestens annähernd in einer Radialebene des Kreisels 1 verläuft.

Um mit möglichst wenig Leistung die relativ flach aufgenommene zu belüftende Flüssigkeit in einem über der Wasseroberfläche in vertikaler Richtung hochgestellten flachen Flüssigkeitsstrahl aus den einzelnen Flüssigkeitsfördereinheiten 10 des Kreisels 1 austreten zu lassen, liegt der Anstellwinkel $\beta$ der oberen Austrittsseite 12 in einem Bereich von 75° bis 90°, und der Anstellwinkel $\alpha$ der unteren Eintrittsseite 13 in einem Bereich von 20° bis 35°.

Um sicherzustellen, dass das durch die Schaufelfläche 11 aufgenommene Wasser nicht unerwünschterweise über die obere Schaufellängsseite 14 hinweg strömt, sondern in die richtige Richtung über die Schaufelaustrittsseite 12 umgelenkt wird, ist an der oberen Schaufellängsseite 14 eine in Drehrichtung V des Kreisels 1 von der Schaufel 11 weg sich erstreckende Strömungsleitwand 15 angeordnet. Dabei liegt der Winkel $\gamma$ zwischen der Schaufel 11 und der oberen Strömungsleitwand 15 in einem Bereich von 90° bis 75°, so dass die letztere annähernd horizontal verläuft.

An der unteren, im Betrieb des Kreisels 1 zum grössten Teil aus dem Wasser herausragenden zweiten Schaufellängsseite 16 ist zur korrekten Strömungsumlenkung des durch die Schaufel 11 aufgenommenen Wassers eine zweite in Drehrichtung des Kreisels 1 von der Schaufel 11 weg sich erstreckende Strömungsleitwand 17 angeordnet, wobei der Winkel $\delta$ zwischen der letzteren und der Schaufel 11 etwa 90° beträgt.

Da das durch die Schaufel 11 aufgenommene Wasser infolge der Drehung des Kreisels 1 beschleunigt aus den einzelnen Flüssigkeitsfördereinheiten austritt, ist es zweckmässig, wenn zur Anpassung an diese Strömungsverhältnisse die Schaufeleintrittsseite 13 senkrecht zur Strömungsrichtung gesehen mindestens 1,2 mal so lang wie die Schaufelaustrittsseite 12 bemessen ist.

Wie insbesondere aus Fig. 3 ersichtlich, verläuft die Schaufelaustrittskante 18 nach unten vorspringend mit einem Anstellwinkel $\varepsilon$ von etwa 65° bis 70° gegenüber einer Horizontalen.

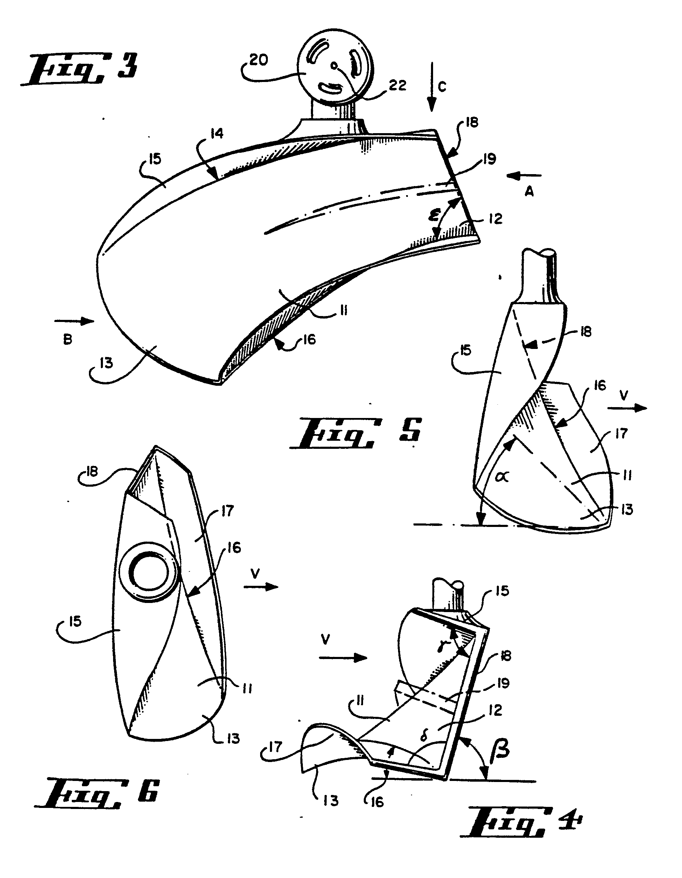

Bei grösseren Flüssigkeitsfördereinheiten 10 kann es zweckmässig sein, wenn, wie in den Fig. 3 und 4 strichpunktiert eingezeichnet, etwa längs der Strömungsmitte der einzelnen Schaufeln 11 je eine in Strömungsrichtung sich erstreckende Strahlunterteilungswand 19 vorgesehen ist.

Um die einzelnen Flüssigkeitsfördereinheiten 10 optimal an ihren Einsatz anpassen zu können und trotzdem mit möglichst wenig Normgrössen auskommen zu können, ist es zweckmässig, wenn, wie aus Fig. 7 ersichtlich, die einzelnen Flüssigkeitsfördereinheiten 10 über die mittels, nicht dargestellter Schrauben verbundenen Flansche 20 und 21 um eine horizontale Achse 22 und über die Wippe 23 um eine vertikale Achse 24 verstellbar sind, indem die Wippe 24 ihrerseits über einen vertikal verlaufenden Zapfen 25 verstellbar mit dem Tragteil 9 des Kreisels 1 verbunden ist. Auf diese Weise können die einzelnen Flüssigkeitsfördereinheiten 10 auf neutrale, schleppende oder stossende Ausströmung eingestellt werden. Es ist auch möglich, die einzelnen Wippen 23 so einzustellen, dass die beiden jeweils daran angeordneten Flüssigkeitsfördereinheiten 10 versetzt zueinander auf zwei unterschiedliche Durchmesser zu liegen kommen.

Um zu verhindern, dass das soeben mittels dem Kreisel 1 belüftete, sich noch im Oberflächenbereich des Wassers befindene Abwasser sofort wieder in den Ansaugbereich des Kreisels 1 gelangt, ist es zweckmässig, wenn der Kreisel 1 wie aus aus Figur 1 ersichtlich auf seiner Aussenseite von einer über die Wasseroberfläche sich erstreckenden Tauchwand 26 umgeben ist, welche über einen einer kegelstumpfförmigen Mantelfläche entsprechenden Verbindungsteil 27 mit dem Strömungsleitrohr 4 verbunden ist. Der mit gekrümmten Schaufeln versehene Leitapparat 6 ist dabei innerhalb diesem konischen Verbindungsteil 27 angeordnet.

Bei der Auslegung dieser Kreisel 1 ist es zweckmässig, wenn man davon ausgeht, dass die nach dem Baukastensystem zusammengesetzten, gleiche Flüssigkeitsfördereinheiten 10 aufweisenden Kreisel 1 immer mit der gleichen Umfangsgeschwindigkeit betrieben werden und zur Anpassung der Sauerstoffeintragsleistung primär die Anzahl der erforderlichen Flüssigkeitsfördereinheiten variiert wird.

**Patentansprüche**

1. Oberflächenbelüftungskreisel zum Umwälzen und Belüften von Wasser, insbesondere von Abwasser in Kläranlagen, mit einem mit einer vertikal verlaufenden Antriebsachse verbundenen Tragteil mit einer Mehrzahl von an diesem befestigten, aus je mindestens einer Schaufel und einer zugeordneten Strömungsleitwand bestehenden Flüssigkeitsfördereinheiten, deren Eintrittsseite sich im Betrieb unterhalb dem Wasserspiegel und deren Austrittsseite sich im Betrieb mindestens zum grösseren Teil oberhalb dem Wasserspiegel befindet, dadurch gekennzeichnet, dass die einzelnen Flüssigkeitsfördereinheiten (10) derart ausgebildet sind, dass die Schaufel (11) mindestens annähernd in einer in Umlaufrichtung des Kreisels (1) gekrümmten, in sich verwundenen Ebene verläuft, dass der Anstellwinkel (β) der oberen Austrittsseite (12) in einem Bereich von 60° bis 105° und der mindestens 35° weniger betragende Anstellwinkel (α) der unteren Eintrittsseite (13) in einem Bereich von 0° bis 50° liegt.

2. Kreisel nach Anspruch 1, dadurch gekennzeichnet, dass die Strömungsleitrichtung der in sich verwundenen Schaufelebene (11) mindestens annähernd in einer Radialebene des Kreisels (1) verläuft.

3. Kreisel nach Anspruch 1 oder 2, dadurch gekennzeichnet, dass über mindestens einen Teil der oberen, im Betrieb des Kreisels (1) mindestens zum Teil aus dem Wasser herausragenden Schaufellängsseite (14) eine in Drehrichtung (V) des Kreisels (1) von der Schaufel (11) weg sich erstreckende Strömungsleitwand (15) angeordnet ist.

4. Kreisel nach einem der Ansprüche 1 bis 3, dadurch gekennzeichnet, dass über mindestens einen Teil der unteren, im Betrieb des Kreisels (1) zum Teil aus dem Wasser herausragenden Schaufellängsseite (16) eine in Drehrichtung (V) des Kreisels (1) von der Schaufel weg sich erstreckende Strömungsleitwand (17) angeordnet ist.

5. Kreisel nach einem der Ansprüche 1 bis 4, dadurch gekennzeichnet, dass der Anstellwinkel (β) der oberen Austrittsseite (12) in einem Bereich von 75° bis 90° liegt.

6. Kreisel nach einem der Ansprüche 1 bis 5, dadurch gekennzeichnet, dass der Anstellwinkel (α) der unteren Austrittsseite (13) in einem Bereich von 20° bis 40° liegt.

7. Kreisel nach einem der Ansprüche 1 bis 6, dadurch gekennzeichnet, dass die einzelnen Flüssigkeitsfördereinheiten (10) um eine horizontale und vorzugsweise auch um eine vertikale Achse verstellbar mit dem Tragteil (9) verbunden sind.

8. Kreisel nach einem der Ansprüche 1 bis 7, dadurch gekennzeichnet, dass die Schaufeleintrittsseite (13) mindestens 1,2 mal so lang wie die Schaufelaustrittsseite (12) ist.

9. Kreisel nach einem der Ansprüche 3 und 4, dadurch gekennzeichnet, dass der Winkel (γ resp. δ) zwischen der Schaufel (11) und der oberen Strömungsleitwand (15) und/oder zwischen der Schaufel (11) und der unteren Strömungsleitwand (17) mindestens im Bereich der Schaufelaustrittsseite (12) in einem Bereich von 60° bis 120° liegt.

10. Kreisel nach einem der Ansprüche 1 bis 9, dadurch gekennzeichnet, dass die Schaufelaustrittskante (18) nach unten vorspringend mit einem Anstellwinkel (ε) in einem Bereich von 50° bis 90° gegenüber einer Horizontalen verläuft.

11. Kreisel nach einem der Ansprüche 1 bis 10, dadurch gekennzeichnet, dass die Ausströmrichtung der Flüssigkeitsfördereinheiten (10) in einem Bereich zwischen einer Horizontalen und einer 30° nach aussen und oben verlaufenden Richtung verläuft.

12. Kreisel nach einem der Ansprüche 1 bis 11, dadurch gekennzeichnet, dass mindestens ein Teil der Flüssigkeitsfördereinheiten (10) mit einer in Ausströmrichtung sich erstreckenden Strahlunterteilungswand (19) versehen sind.

13. Kreisel nach einem der Ansprüche 1 bis 12, dadurch gekennzeichnet, dass die Schaufelaustrittskanten (18) von in Umfangsrichtung des Kreisels (1) betrachtet nebeneinander angeordneten Flüssigkeitsfördereinheiten (10) einen unterschiedlichen Abstand von der Drehachse (3) des Kreisels (1) aufweisen.

14. Verfahren zum Betrieb von Oberflächenbelüftungskreiseln nach Anspruch 1, dadurch gekennzeichnet, dass man nach dem Baukastensystem zusammengesetzte Kreisel unterschiedlichen Durchmessers jedoch mit gleichen Flüssigkeitsfördereinheiten mit der gleichen Umfangsgeschwindigkeit betreibt.

15. Verwendung des Oberflächenbelüftungskreisels nach Anspruch 1 in einem Abwasserbelüftungsbecken, dadurch gekennzeichnet, dass unterhalb dem Kreisel und koaxial zu dessen Drehachse (3) ein bis in den Bodenbereich des Beckens (2) sich erstreckendes Strömungsleitrohr (4) angeordnet ist, welcher vorzugsweise auf seiner Einström- und/oder Ausströmseite mit je einem feststehenden Strömungsleitapparat (5 resp. 6) versehen ist.

16. Verwendung des Oberflächenbelüftungskreisels nach Anspruch 1 in einem Abwasserbelüftungsbecken, dadurch gekennzeichnet, dass in letzterem mindestens eine horizontal und/oder eine vertikal sich erstreckende Strömungsbremsplatte (8) angeordnet ist.

17. Verwendung nach Anspruch 15, dadurch gekennzeichnet, dass der Kreisel auf seiner Aussenseite von einer über die Wasseroberfläche sich erstreckenden Tauchwand (26) umgeben ist, welche vorzugsweise über einen einer kegelstumpfförmigen Mantelfläche (27) entsprechenden Verbindungsteil mit dem Strömungsleitrohr (4) verbunden ist.

**Claims**

1. Surface aeration rotor for circulating and aerating water, in particular waste water in sewage treatment plants, having a carrier part which is connected to a vertically extending drive axis and which has a plurality of liquid-moving units secured to the carrier part and each comprising at least one blade and an associated flow deflection wall, the entry side of the liquid-moving units being located below the water level in operation and the exit side of the fluid-moving units being located at least mostly above the water level in operation, characterised in that the individual liquid-moving units (10) are constructed such that the blade (11) extends at least approximately in a plane curved in the direction of revolution of the rotor (1) and in itself twisted, in that the angle (β) of incidence of the upper exit side (12) is in a range from 60° to 105° and the angle (α) of incidence of the lower entry side (13), which is at least 35° less, is in a range from 0° to 50°.

2. Rotor according to Claim 1, characterised in that the flow deflection direction of the blade plane (11), which is in itself twisted, extends at least approximately in a radial plane of the rotor (1).

3. Rotor according to Claim 1 or 2, characterised in that a flow deflection wall (15) extending in the direction (V) of rotation of the rotor (1) away from the blade (11) is arranged over at least part of the upper longitudinal side (14) of the blade to project at least partly out of the water during operation of the rotor (1).

4. Rotor according to one of Claims 1 to 3, characterised in that a flow deflection wall (17) extending in the direction (V) of rotation of the rotor (1) away from the blade is arranged over at least part of the lower longitudinal side (16) of the blade to project partly out of the water during operation of the rotor (1).

5. Rotor according to one of Claims 1 to 4, characterised in that the angle (β) of incidence of the upper exit side (12) is in a range from 75° to 90°.

6. Rotor according to one of Claims 1 to 5, characterised in that the angle (α) of incidence of the lower exit side (13) is in a range from 20° to 40°.

7. Rotor according to one of Claims 1 to 6, characterised in that the individual liquid-moving units (10) are connected to the carrier part (9), adjustably about a horizontal and preferably also about a vertical axis.

8. Rotor according to one of Claims 1 to 7, characterised in that the blade entry side (13) is at least 1.2 times as long as the blade exit side (12).

9. Rotor according to one of Claims 3 and 4, characterised in that the angle (λ and δ respectively) between the blade (11) and the upper flow deflection wall (15) and/or between the blade (11) and the lower flow deflection wall (17) at least in the region of the blade exit side (12) is in a range from 60° to 120°.

10. Rotor according to one of Claims 1 to 9, characterised in that the blade exit edge (18) extends projecting downwards at an angle (ε) of incidence in a range of 50° to 90° with respect to the horizontal.

11. Rotor according to one of Claims 1 to 10, characterised in that the outflow direction of the liquid-moving units (10) extends in a range between the horizontal and a direction extending at 30° outwards and upwards.

12. Rotor according to one of Claims 1 to 11, characterised in that at least some of the liquid-moving units (10) are provided with a jet dividing wall (19) extending in the outflow direction.

13. Rotor according to one of Claims 1 to 12, characterised in that the blade exit edges (18) of adjacently arranged liquid-moving units (10), seen in the peripheral direction of the rotor (1), are at a different distance from the axis (3) of rotation of the rotor (1).

14. Process for operating surface aeration rotors according to Claim 1, characterised in that rotors put together in a modular construction and having different diameters but like liquid-moving units are operated at the same peripheral speed.

15. Use of the surface aeration rotor according to Claim 1 in a waste water aeration basin, characterised in that there is arranged below the rotor and coaxially with respect to the axis (3) of rotation of the latter a flow deflection pipe (4) extending into the base region of the basin (2) and preferably provided on its inflow and/or outflow side with a respective fixed flow deflection apparatus (5 and 6 respectively).

16. Use of the surface aeration rotor according to Claim 1 in a waste water aeration basin, characterised in that there is arranged in the latter at least one horizontally and/or one vertically extending flow brake plate (8).

17. Use according to Claim 15, characterised in that the rotor is surrounded on its outside by a baffle (26) which extends above the water surface and is preferably connected to the flow deflection tube (4) by means of a connection piece in the form of a frustoconical outer shell (27).

**Revendications**

1. Toupie de ventilation superficielle pour l'agitation et la ventilation de l'eau, plus particulièrement de l'eau résiduaire dans les installations d'épuration, avec un élément de support, lié à un arbre de commande vertical et muni d'une multitude d'unités de refoulement de liquide, qui y sont fixées, chacune composée d'au moins une pale ainsi que d'une paroi de guidage d'écoulement, dont le côté d'entrée se trouve au-dessous du niveau de l'eau lorsque l'installation est en marche et dont au moins la plus grande partie du côté de sortie se trouve au-dessus du niveau de l'eau lorsque l'installation fonctionne, caractérisée en ce que les différentes unités de refoulement de liquide (10) ont une forme de manière que la pale (11) se déroule au moins approximativement dans un plan tordu en soi et courbé dans le sens de rotation de la toupie (1), que l'angle d'attaque (β) du côté supérieur de sortie (12) se trouve dans une plage qui s'étend de 60° à 105° et que l'angle d'attaque (α) du côté inférieur d'entrée (13) qui est au moins de 35° plùs réduit se trouve dans une plage qui s'étend de 0° à 50°.

2. Toupie selon la revendication 1, caractérisée en ce que le dispositif de guidage d'écoulement du plan tordu en soi de la pale (11) se déroule au moins approximativement dans le plan radial de la toupie.

3. Toupie selon la revendication 1 ou 2, caractérisée en ce que sur au moins une partie du côté longitudinal supérieur de la pale (14) émergeant au moins partiellement de l'eau lorsque la toupie fonctionne, une paroi de guidage d'écoulement (15) est aménagée qui s'étend dans le sens de rotation (V) de la toupie (1) en s'éloignant da la page (11).

4. Toupie selon une des revendications 1 à 3, caractérisée en ce que, sur au moins une partie du côté longitudinal inférieur de la pale (16) émergeant partiellement de l'eau lorsque la toupie fonctionne, une paroi de guidage d'écoulement (17) est aménagée qui s'étend dans le sens de rotation (V) de la toupie (1) en s'éloignant de la pale (11).

5. Toupie selon une des revendications 1 à 4, caractérisée en ce que l'angle d'attaque (β) du côté de sortie supérieur (12) se trouve dans une plage qui s'étend de 75° à 90°.

6. Toupie selon une des revendications 1 à 5, caractérisée en ce que l'angle d'attaque (α) du côté de sortie inférieur (13) se trouve dans une plage qui s'étend de 20° à 40°.

7. Toupie selon une des revendications 1 à 6, caractérisée en ce que les différentes unités de refoulement de liquide (10) sont réliées à l'élément de support (9) de façon réglable autour d'un axe horizontal, et de préférence aussi autour d'un axe vertical.

8. Toupie selon une des revendications 1 à 7, caractérisée en ce que le côté d'entrée de la pale (13) a une longuer d'au moins 1,2 fois celle du côté de sortie de la pale (12).

9. Toupie selon une des revendications 3 et 4, caractérisée en ce que l'angle (γ resp. δ) entre la pale (11) et la paroi de guidage d'écoulement supérieure (1) et/ou entre la pale (11) et la paroi de guidage d'écoulement inférieure (17) se trouve dans une plage qui s'étend de 60° à 120°, au moins dans la zone du côté de sortie de la pale (12).

10. Toupie selon une des revendications 1 à 9, caractérisée en ce que le bord d'écoulement (18) de la pale s'étend en saillie vers le bas sous un angle d'attaque (ε) dans une plage qui s'étend de 50 à 90° par rapport à une ligne horizontale.

11. Toupie selon une des revendications 1 à 10, caractérisée en ce que la direction d'écoulement des unités de refoulement de liquide (10) se situe dans une plage qui s'étend entre une ligne horizontale et une ligne qui s'étend à 30° en haut et vers l'extérieur.

12. Toupie selon une des revendications 1 à 11, caractérisée en ce qu'au moins une partie des unités de refoulement de liquide (10) sont munies d'une paroi de séparation du jet (19) qui s'étend dans la direction de l'écoulement.

13. Toupie selon une des revendications 1 à 11, caractérisée en ce que les bords d'écoulement (18) de la pale des unités de refoulement de liquide (10), aménagées l'une à côté de l'autre, vu dans le sens circonférentiel de la toupie (1), sont placés à une distance differente de l'axe de rotation (3) de la toupie (1).

14. Méthode pour faire fonctionner des toupies de ventilation superficielle selon la revendication 1, caractérisée en ce que l'on fait fonctionner des toupies composées selon le principe de la construction en éléments normalisés de diamètres différents, pourtant munies des mêmes unités de refoulement de liquide à la même vitesse circonférentielle.

15. Application de la toupie de ventilation superficielle selon la revendication 1 dans un bassin de ventilation de l'eau résiduaire, caractérisée en ce qu'un tuyau de guidage d'écoulement (4) est aménagé au-dessous de la toupie et coaxialement par rapport à son axe de rotation (3) et s'étend jusqu'à la zone de fond du bassin (2), lequel tuyau est muni de préférence d'un dispositif de guidage de l'écoulement fixe (5 resp. 6) du côté d'entrée et/ou de sortie.

16. Application de la toupie de ventilation superficielle selon la revendication 1 dans un bassin de ventilation de l'eau résiduaire, caractérisée en ce que ce dernier est muni d'au moins une plaque de freinage d'écoulement (8) qui s'étend dans le plan horizontal et/ou vertical.

17. Application selon la revendication 1, caractérisée en ce que l'extérieur de la toupie est entouré d'une paroi submersible (26) qui s'étend au-dessus de la surface d'eau, qui est connectée au tuyau de guidage d'écoulement (4) de préférence par une enveloppe en forme d'un cône tronqué (27).

Fig. 1

Fig. 2

*Fig. 3*

*Fig. 5*

*Fig. 6*

*Fig. 4*

3

Fig. 7